# FASCICULE DE BREVET EUROPEEN

(11) **EP 3 270 087 B1**
(45) Date de publication et mention de la délivrance du brevet: **27.02.2019**
(21) Numéro de dépôt: 17180717.5
(22) Date de dépôt: 11.07.2017
(51) Int. Cl.: F28F 21/04, F28D 17/00, F28D 20/00, F02C 6/16, F02C 1/00, F02C 6/18, F02C 7/10

(54) **CONTENEUR D'UN SYSTEME DE STOCKAGE ET DE RESTITUTION DE LA CHALEUR COMPORTANT UNE DOUBLE PAROI EN BETON**
BEHÄLTER EINES WÄRMESPEICHER- UND -ABGABESYSTEMS, DER MINDESTENS EINE DOPPELWAND AUS BETON UMFASST
CONTAINER OF A SYSTEM FOR STORING AND RESTORING HEAT COMPRISING A DOUBLE CONCRETE WALL

(30) Priorité: 15.07.2016 FR 1656804
(43) Date de publication de la demande: 17.01.2018
(73) Titulaire: IFP Energies nouvelles, 92500 Rueil-Malmaison (FR)
(72) Inventeur: DELEAU, Fabrice, 69310 Pierre-Benite (FR); RICHARD, Florence, 92380 Garches (FR); TEIXEIRA, David, 78290 Croissy sur Seine (FR)
(74) Mandataire: IFP Energies nouvelles

(56) Documents cités:
- WO-A1-2015/150104
- FR-A1- 2 998 556
- US-A- 4 405 010

## Description

### Domaine de l'invention

La présente invention concerne le domaine du stockage de chaleur, en particulier les conteneurs pour le stockage de chaleur de grand volume, tels qu'utilisés pour le stockage d'énergie par air comprimé (CAES de l'anglais « Compressed Air Energy Storage »), en particulier pour le stockage d'énergie par air comprimé de type AACAES (de l'anglais « Advanced Adiabatic Compressed Air Energy Storage ») dans lequel est prévu le stockage de l'air et le stockage de la chaleur générée de manière indépendante.

### Contexte général

La majorité des sources d'énergies primaires, telles que le gaz, le pétrole, le charbon, peut être stockée facilement, et ainsi permettre une production d'électricité à la demande, contrairement à la production d'électricité à partir de sources d'énergies renouvelables telles que l'énergie éolienne ou solaire. Pour fournir de l'électricité à la demande, produite par ce type d'énergies renouvelables, il est nécessaire de stocker l'électricité. Or, il est très difficile de stocker l'électricité en grande quantité. Il est néanmoins possible de convertir l'électricité en énergies dites intermédiaires, et de la stocker sous la forme d'énergie potentielle, cinétique, chimique ou thermique.

L'électricité peut par exemple être stockée sous forme d'air comprimé. C'est ce qui est réalisé dans les systèmes CAES dans lesquels une énergie, typiquement l'électricité, que l'on souhaite utiliser à un autre moment, est stockée sous forme d'air comprimé. Pour le stockage, l'énergie électrique entraîne des compresseurs d'air, et pour le déstockage, l'air comprimé entraîne des turbines qui sont reliées à une génératrice électrique. L'air comprimé est typiquement stocké dans une cavité du sous-sol, une formation rocheuse poreuse, un réservoir de gisement pétrolier ou gazier épuisé, ou tout autre réservoir d'air comprimé, qui peut être une cuve sous pression. Le rendement de cette solution n'est pas optimal car une partie de l'énergie de l'air comprimé se retrouve sous forme de chaleur qui n'est pas utilisée : la chaleur produite lors de la compression de l'air est rejetée. D'autre part, l'air stocké est chauffé pour réaliser la détente de l'air, ce qui pénalise là encore le rendement énergétique du système.

Plusieurs variantes existent actuellement à ce système CAES. On peut citer notamment les systèmes et procédés :
- ACAES (de l'anglais « Adiabatic Compressed Air Energy Storage ») dans lequel l'air est stocké à haute température due à la compression. Toutefois, ce type de système nécessite un système de stockage spécifique, volumineux et coûteux (stockage adiabatique).
- AACAES (de l'anglais « Advanced Adiabatic Compressed Air Energy Storage ») dans lequel l'air est stocké à température ambiante, et la chaleur due à la compression est également stockée, séparément, dans un système de stockage de la chaleur TES (de l'anglais « Thermal Energy Storage »). La chaleur stockée dans le système TES est utilisée pour chauffer l'air avant sa détente.

Selon certaines conceptions envisagées du AACAES, la chaleur est stockée en utilisant un fluide caloporteur permettant de stocker la chaleur issue de la compression de l'air et de la restituer à l'air avant sa détente au moyen d'échangeurs de chaleur. Par exemple, la demande de brevet EP 2447501 décrit un système AACAES dans lequel de l'huile, utilisée en tant que fluide caloporteur, circule en circuit fermé pour échanger de la chaleur avec l'air.

Selon d'autres conceptions envisagées du AACAES, la chaleur est stockée au moyen de solides statiques contenus dans un ou plusieurs conteneurs. Par exemple, la chaleur est stockée dans un matériau sous forme de particules en lit fixe disposé dans un ou plusieurs conteneurs, et traversé par l'air à refroidir. Cette chaleur est restituée à l'air froid qui traverse le lit fixe en sens opposé lors d'une phase de décharge (décompression de l'air).

La présente invention porte sur un conteneur de ce dernier type, apte à recevoir un matériau de stockage de la chaleur sous forme de particules en lit fixe.

Le conteneur est avantageusement utilisé pour le stockage d'énergie sous forme d'air comprimé de type AACAES, mais n'est pas limité à cette application. Ainsi, le conteneur peut convenir à toute application mettant en oeuvre un système de stockage et de restitution de la chaleur requérant une capacité de stockage importante de la chaleur, et pouvant nécessiter une résistance à des températures et pressions importantes. A titre d'exemple on peut citer d'autres domaines d'application que celui du stockage d'énergie sous forme d'air comprimé, tel que le domaine de la métallurgie, par exemple dans le cadre de la récupération et de la restitution de la chaleur des fumées de hauts fourneaux, le domaine du stockage de l'énergie marine, etc.

Une difficulté majeure consiste à concevoir des conteneurs de systèmes de stockage de la chaleur qui puissent être opérés à de fortes pressions, de l'ordre de plusieurs dizaines de bars, typiquement des pressions allant jusqu'à 65-85 bars, et qui puissent fonctionner à de hautes températures, typiquement de plusieurs centaines de degrés C, pouvant aller jusqu'à 750°C.

Pour résister aux hautes températures ainsi qu'aux fortes pressions, les TES comprennent généralement de grandes cuves cylindriques en béton remplies d'un matériau de stockage de la chaleur, qui comportent des parois épaisses en béton précontraint pouvant être renforcées par de l'acier, et qui peuvent présenter diverses structures de renforcement des parois, par exemples de type entretoises, pour résister aux contraintes exercées sur les parois dues à la pression interne.

On connait par exemple un TES dans le cadre du stockage d'air comprimé adiabatique pouvant fonctionner à très haute température, par exemple jusqu'à 650°C, et à des pressions jusqu'à 65 bars, tel que décrit dans le brevet EP1857614B. Ce système de stockage comporte une double structure formée par deux capsules emboitées l'une dans l'autre, avec une capsule de pression extérieure en béton précontraint, et une capsule interne en béton résistante à la chaleur et renfermant le matériau de stockage de la chaleur, par exemple des éléments en céramique empilés. Ce système repose sur une contribution mécanique de la paroi béton pour contenir la pression interne. Ceci impose une réalisation sur site avec la fabrication de béton précontraint, sans réalisation possible en atelier. En outre, de tels systèmes, impliquant la construction de parois cylindriques en béton de fortes épaisseurs (plus de 1 m par exemple) posent des difficultés d'ingénierie, et sont couteuses et complexes à réaliser. Enfin, ce système ne permet pas de répondre aux contraintes de pression visées aujourd'hui dans les systèmes TES, qui sont plutôt de l'ordre de 125 bars, voire 300 bars.

On connait également un système de stockage de la chaleur pouvant stocker de la chaleur à des pressions supérieures à 3-4 bars, pouvant être utilisé dans des systèmes de stockage d'air comprimé quasi-adiabatiques, tel que décrit dans le brevet FR2998556A1. Un tel conteneur présente des parois en béton réfractaire entourées d'une coque en acier, un isolant thermique étant prévu entre la coque en acier et les parois en béton. La structure en sandwich formée par l'ensemble parois en béton réfractaire/isolant/coque en acier permet de réduire les pertes thermiques en isolant le matériau de stockage thermique, permet de réduire la température de la paroi en acier limitant ainsi la dégradation des caractéristiques de cette dernière, permet de limiter la température de peau de la coque acier améliorant la sécurité, et permet de contenir la pression régnant dans le conteneur fonction de l'épaisseur de la coque acier. Le conteneur selon FR2998556A1 comporte également des grilles de maintien du matériau de stockage de la chaleur pouvant être disposées à différentes hauteurs dans le conteneur, qui jouent également un rôle d'entretoises limitant la contrainte s'exerçant sur les parois. Cette configuration permet de maintenir le matériau de stockage à différentes hauteurs dans le conteneur, participant ainsi à limiter la contrainte s'exerçant sur les parois, et permet également une meilleure répartition du matériau dans la cuve ce qui améliore l'interaction de l'air avec le matériau de stockage.

Lors des opérations de charge et de décharge de l'air, la structure subit des dilatations thermiques, notamment au niveau des grilles. Afin d'absorber ces dilatations, le système de stockage de la chaleur selon FR2998556A1 prévoit que les grilles soient fixées aux parois en béton par des anneaux associés à des chaines, évitant la génération de contraintes mécaniques lors des dilatation thermiques. FR2998556A1 décrit un conteneur d'un système de stockage et de restitution de la chaleur selon le préambule de la revendication indépendante 1.

Cependant, en raison des efforts importants mis en jeu par le stockage du matériau, il est difficile de mettre en oeuvre un tel conteneur comportant des grilles fixées par un système d'anneaux et de chaînes mal adapté à la quantité et au poids du matériau utilisé, notamment dans des applications de type AACAES dans lesquelles plusieurs centaines de tonnes de matériau sous formes de particules sont stockées dans des réservoirs d'une capacité comprise entre environ 200 m³ et 1000 m³. En outre un tel système de fixation est encombrant.

### Objectifs et résumé de l'invention

La présente invention propose une nouvelle réalisation de systèmes de stockage de chaleur adaptés à des conditions de pression élevées, pouvant typiquement fonctionner jusqu'à des pressions de l'ordre de 300 bars, et adaptés à des conditions de température modérées, typiquement des températures maximum de l'ordre de 300°C.

En particulier, la présente invention vise à fournir un conteneur de TES pouvant à la fois résister à de fortes pressions internes liées au gaz sous pression pouvant être supérieures à 100 bars et même aller jusqu'à 300 bars, et à la fois résister aux contraintes exercées par le matériau de stockage de la chaleur disposé sous forme de lit fixe de particules dans le conteneur.

La présente invention vise par ailleurs à limiter les problèmes liés à la dilation thermique lors des opérations de stockage et de restitution de la chaleur, à diminuer les coûts de fabrication du conteneur, et à faciliter le montage du conteneur.

Ainsi, pour atteindre au moins l'un des objectifs susvisés, parmi d'autres, et pour surmonter au moins en partie les inconvénients de l'art antérieur exposés plus haut, la présente invention propose, selon un premier aspect, un conteneur d'un système de stockage et de restitution de la chaleur, comprenant une enceinte comportant des moyens d'injection et de soutirage d'un gaz à refroidir ou réchauffer, ladite enceinte étant délimitée par une première enveloppe en béton entourée par une couche isolante thermiquement, ladite couche isolante étant entourée d'une coque en acier, et
ladite enceinte comportant au moins deux modules chaque module comprenant au moins:
- un premier volume délimité par une première paroi latérale en béton et un fond perforé ;
- un deuxième volume entourant ledit premier volume et délimité par la première paroi latérale, par une deuxième paroi latérale en béton, et par le fond perforé;
lesdits premier et deuxième volumes étant aptes à contenir chacun un lit fixe de particules d'un matériau de stockage et de restitution de chaleur, et
lesdits modules étant disposés l'un au-dessus de l'autre de manière centrée tel que les deuxièmes parois latérales forment la première enveloppe en béton et les premières parois latérales forment une deuxième enveloppe en béton, les première et deuxième enveloppes en béton et la couche isolante étant non étanches à la pression.

Selon un premier mode de réalisation, le fond perforé est en métal.

Selon ce premier mode de réalisation, le fond perforé de chaque module peut comporter une grille unique en métal bornée par la deuxième paroi latérale en béton, et supportant la première paroi latérale en béton.

Alternativement, le fond perforé de chaque module peut comporter une première grille en métal bornée par la première paroi latérale en béton et une deuxième grille en métal bornée par les première et deuxième parois latérales en béton.

Selon un deuxième mode de réalisation, le fond perforé de chaque module est en béton.

Selon ce deuxième mode de réalisation, les modules peuvent avantageusement être des modules en béton monoblocs.

Avantageusement, le matériau de stockage et de restitution de la chaleur est sous forme de particules en béton.

De préférence, le conteneur est en forme de colonne, les premières et deuxièmes parois latérales en béton des modules étant cylindriques.

De préférence, le conteneur comporte des trous d'équipression dans les première et deuxième enveloppes en béton.

Chaque module peut en outre comporter une zone d'homogénéisation du gaz placée sous le fond perforé et vide de tout matériau de stockage de la chaleur.

Avantageusement, la conductivité thermique est comprise entre :
- 0,1 et 2 W.m⁻¹.K⁻¹ pour les enveloppes en béton,
- 0,01 et 0,17 W.m⁻¹.K⁻¹ pour la couche isolante, et
- 20 et 250 W.m⁻¹.K⁻¹ pour la coque en acier.

Avantageusement, l'épaisseur de la couche isolante est telle que, en utilisation de stockage de la chaleur, la température de la coque en acier est inférieure ou égale à 50°C, et dans lequel la couche isolante est de préférence choisie parmi une couche de laine de roche, de perlite, de la laine de verre, de verre cellulaire, une lame d'air, et plus préférentiellement est une couche de laine de roche.

Le conteneur peut comporter entre 2 et 12 modules en béton.

L'enceinte a de préférence un volume compris entre 200 m³ et 1000 m³.

Le conteneur peut comporter plusieurs enceintes montées en série et/ou en parallèle.

Selon un deuxième aspect, l'invention porte sur un système de stockage et de restitution de la chaleur comportant au moins un conteneur selon l'invention.

Selon un troisième aspect, l'invention porte sur une installation de stockage d'énergie par air comprimé de type AACAES comportant :
- un système de compression pour comprimer de l'air lors d'une phase de compression ;
- un système de stockage et de restitution de la chaleur selon l'invention pour stocker la chaleur de l'air comprimé lors de la phase de compression et pour restituer la chaleur à l'air comprimé lors d'une phase de détente ;
- un réservoir final de stockage de l'air comprimé par le système de compression et refroidi par le système de stockage et de restitution de la chaleur ;
- un dispositif de détente de l'air comprimé issu du réservoir de stockage final lors de la phase de détente.

Selon un mode de réalisation, le réservoir final a un volume compris entre 1000 m³ et 7000 m³ et l'enceinte dudit au moins un conteneur du système de stockage et de restitution de la chaleur a un volume compris entre 200 m³ et 1000 m³, le système de stockage et de restitution de la chaleur comprenant de préférence au moins trois conteneurs.

Selon un quatrième aspect, l'invention porte sur un procédé de montage d'un conteneur selon l'invention, comportant :
- l'installation de la coque en acier dépourvue d'un chapeau de couverture sur le site de montage du conteneur, la coque en acier étant disposée sur un support ;
- le montage des modules, l'installation de la couche isolante et le remplissage des modules par le matériau de stockage de la chaleur, par insertion successive des modules dans la coque en acier de manière centrée pour former la première enveloppe en béton et la deuxième enveloppe en béton;
- la fermeture du conteneur par assemblage de la coque en acier avec un couvercle en acier préalablement isolé thermiquement, de préférence par soudage.

Selon un mode de réalisation, on remplit le premier volume et le deuxième volume du module par le matériau de stockage de la chaleur de manière à créer deux lits fixes de particules une fois ledit module inséré dans la coque en acier.

Alternativement, on peut remplir le premier volume et le deuxième volume du module par le matériau de stockage de la chaleur de manière à créer a deux lits fixes de particules avant l'insertion dudit module dans la coque en acier.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Brève description des figures

La figure 1 est un schéma illustrant le principe d'un procédé AACAES dans lequel est mis en oeuvre un système de stockage et de restitution de la chaleur (TES) selon un mode de réalisation non limitatif de l'invention.
La figure 2 est un schéma d'un conteneur de TES selon un premier mode de réalisation de l'invention dans lequel les modules en béton du conteneur comportent un fond perforé en métal.
La figure 3 est un schéma d'un conteneur de TES selon une variante du premier mode de réalisation de l'invention.
La figure 4 est un schéma d'un conteneur de TES selon un deuxième mode de réalisation de l'invention dans lequel les modules du conteneur comportent un fond perforé en béton.
La figure 5A est un schéma d'un module du conteneur de TES selon le premier mode de réalisation illustré à la figure 2. Les figures 5B et 5C illustrent un détail dudit module.
La figure 6 est un schéma d'un module du conteneur de TES selon la variante du premier mode de réalisation illustrée à la figure 3.
La figure 7 est un schéma d'un module en béton du conteneur de TES selon le deuxième mode de réalisation illustré à la figure 4.
Les figures 8A et 8B sont des vues 3D du module en béton illustré à la figure 7.
La figure 9 est un schéma d'un module en béton du conteneur de TES selon une variante du deuxième mode de réalisation illustré à la figure 4.
La figure 10 est un schéma d'une partie d'un conteneur de TES selon une variante du premier mode de réalisation avec des modules comportant des espaces d'homogénéisation du gaz.
La figure 11 est un schéma illustrant un exemple d'assemblage du conteneur de TES représenté à la figure 4.
La figure 12 est un graphique illustrant l'évolution de la température à travers la paroi multicouches de conteneur de TES illustré à la figure 2.
La figure 13 est une vue 3D d'un premier exemple de coque acier d'un conteneur de TES selon l'invention.
La figure 14 est une vue 3D d'un deuxième exemple de coque acier d'un conteneur de TES selon l'invention.
La figure 15 est une vue 3D d'un troisième exemple de coque acier d'un conteneur de TES selon l'invention.

Sur les figures, les mêmes références désignent des éléments identiques ou analogues.

### Description détaillée de l'invention

La présente invention porte sur un conteneur d'un système de stockage et de restitution de la chaleur (TES) qui possède une structure renforcée par la présence d'une double enveloppe en béton.

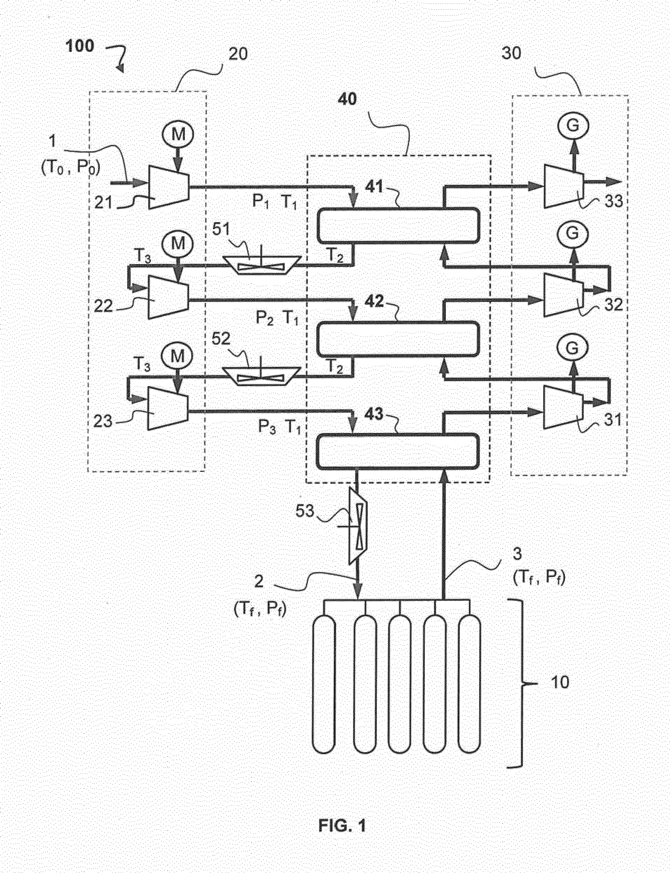

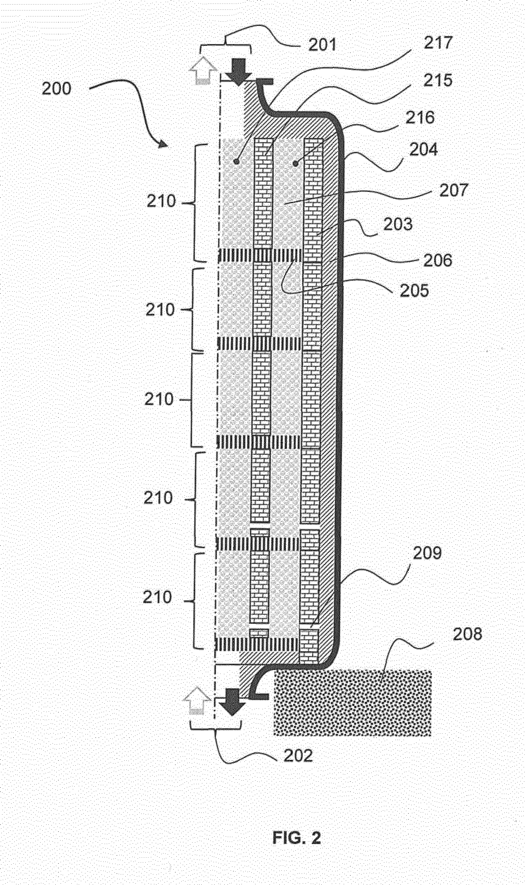

La figure 1 illustre schématiquement le principe de fonctionnement d'une installation AACAES comprenant un système de stockage et de restitution de la chaleur (TES) selon l'invention. Les particularités du conteneur du TES selon l'invention ne sont pas représentées sur cette figure, et sont décrites plus loin, notamment en relation avec les figures 2 à 15.

Sur la figure 1, l'installation AACAES 100 comporte un système de compression 20 de l'air, un système de détente 30 de l'air, un système de stockage et de restitution de la chaleur de l'air dénommé TES 40, et un réservoir final 10 pour stocker l'air comprimé.

Le TES selon l'invention est adapté à tout type de gaz, notamment l'air. Dans ce cas, l'air en entrée utilisé pour la compression peut être prélevé de l'air ambiant, et l'air en sortie après la détente peut être relâché dans l'air ambiant. Dans la suite de la description, seule la variante de réalisation avec de l'air comprimé sera décrite. Toutefois, tout autre gaz que l'air peut être mis en oeuvre dans le conteneur de TES selon l'invention.

Le train de compression 20 comporte trois étages de compression, chaque étage comprenant un compresseur (21, 22, 23). Le nombre d'étages de compression est fonction des technologies et des performances des compresseurs et comprend de préférence de un à six compresseurs. Le train de compression est nécessaire pour obtenir la pression désirée de l'air qui est stocké dans le réservoir 10. De préférence, la pression de l'air comprimé dans le réservoir final 10 est comprise entre 50 bars et 300 bars. Les compresseurs sont par exemple entraînés par un moteur M, notamment un moteur électrique.

Le système de détente 30 de l'air comporte trois étages de turbines. Les trois turbines 31, 32, et 33 sont utilisées pour détendre l'air et générer la puissance électrique. Les turbines sont typiquement reliées à un générateur d'électricité G. Le nombre d'étages de détente est de préférence identique à celui du train de compression.

Typiquement, le nombre de turbines est égal au nombre de conteneurs de TES, et le nombre de compresseurs est égal ou supérieur au nombre de conteneurs de TES.

Un conteneur de TES par étage de compression est nécessaire. Ainsi le TES 40 comporte trois conteneurs (41, 42, 43). Chaque conteneur comprend une enceinte définissant un volume comportant au moins un lit fixe de particules d'un matériau de stockage de la chaleur, et est conçu pour résister à de hautes pressions et des températures modérées. Le matériau de stockage de la chaleur est apte à stocker les calories de l'air qui traverse le conteneur et qui est mis en contact avec ledit matériau, et de restituer cette chaleur à l'air qui traverse le conteneur à un autre moment. Ces conteneurs sont décrits en détails plus loin dans la description.

Lors de la phase de compression, dite aussi phase de stockage ou phase de charge, un air chaud, produit par la compression dans un compresseur (21, 22, 23), est admis dans un conteneur du TES (41, 42, 43) et ressort à faible température pour subir l'étage de compression suivant ou être stocké dans le réservoir final 10. Ainsi, l'air 1 entre à une température T₀ et une pression P₀ dans le compresseur 21, par exemple à 25°C (température ambiante) et à la pression atmosphérique. L'air est comprimé dans le compresseur 21, et chauffé du fait de la compression, et en ressort à une température T₁ et une pression P₁ plus élevées qu'initialement (T₀, P₀), par exemple à environ 260°C et environ 6 bars. L'air comprimé et chauffé entre alors dans le conteneur 41 et traverse le matériau de stockage de la chaleur avec lequel il échange des calories, pour en ressorti refroidi à une température T₂, par exemple à environ 100°C. Cet air refroidi peut éventuellement être davantage refroidi dans un dispositif de ventilation 51 placé en sorti du conteneur de TES 41, pour atteindre une température T₃ inférieure à la température T₂, s'approchant de la température ambiante. La température T₃ est par exemple égale à environ 50°C. L'installation AACAES peut ainsi comprendre au moins un dispositif de refroidissement supplémentaire de l'air, différent des conteneurs de TES, par exemple de type ventilateur, pour abaisser la température de l'air en sorti de chaque conteneur de TES, et comprend de préférence autant de dispositifs de refroidissement supplémentaire, par exemple de type ventilateurs, que de conteneurs TES, chacun étant positionné sur la ligne d'air sortant de conteneur de TES et entrant dans le compresseur d'un étage de compression ou entrant dans le réservoir final 10. L'air éventuellement refroidi dans le ventilateur 51 est ensuite envoyé dans le compresseur 22, pour subir une nouvelle compression et augmentation de température l'accompagnant, et en ressort à une pression P₂ supérieure à la pression P₁, par exemple à une pression d'environ 30 bars, et à la température T₁. L'air à la température T₁ et pression P₂ est alors envoyé dans le conteneur de TES 42 où il est refroidi de la même manière que dans le conteneur 41. L'air ressort du conteneur 42 à la température T₂, est éventuellement refroidi davantage dans le ventilateur 52 jusqu'à la température T₃, avant d'être envoyé dans le dernier compresseur 23. L'air comprimé en sortie du compresseur 23 a une pression P₃ supérieure à la pression P₂, par exemple est à environ 125 bars, et est à la température T₁. Il est envoyé dans le conteneur de TES 43, puis éventuellement dans un ventilateur 53, pour enfin être envoyé (air 2) et stocké dans le réservoir de stockage d'air final 10, à une température de stockage T_{f}, qui est sensiblement égale à la température en sortie du dernier conteneur TES 43 ou éventuellement à la température T₃ en sortie du dernier ventilateur 53, par exemple égale à environ 50°C et de préférence égale à la température ambiante, et une pression de stockage P_{f}, qui est sensiblement égale à la pression P₃ en sortie du dernier compresseur 23 (modulo la perte de charge à l'issue du passage dans le conteneur de TES et éventuellement dans le ventilateur), par exemple environ 125 bars.

Lors de la phase de détente, dite aussi phase de déstockage ou phase de décharge, l'air froid, produit lors de la détente dans une turbine, est admis dans le conteneur du TES (41, 42, 43) pour lui transférer la chaleur stockée. Ainsi, l'air 3 sortant du réservoir 10 à la température de stockage T_{f} et la pression de stockage P_{f}, entre dans le conteneur de TES 43 où il est réchauffé au contact du matériau de stockage de la chaleur qui restitue la chaleur collectée lors de la phase de stockage. L'air réchauffé est ensuite envoyé dans la turbine 31 il subit une détente, et de ce fait également un refroidissement. En sorti de la turbine 31, l'air refroidi est envoyé dans le conteneur de TES 42 pour y être réchauffé, comme dans le conteneur 43, puis subit à nouveau une détente, et un refroidissement, par son passage dans la turbine 32. Avant son entrée dans le troisième étage de détente par la turbine 33, l'air sortant de la turbine 32 est envoyé dans le conteneur de TES 41 à fin de subir un dernier réchauffement.

Grâce au TES, la chaleur formée lors de la phase de compression de l'air est avantageusement stockée dans les conteneurs de TES et restituée lors de la phase de détente de l'air comprimé, assurant ainsi un rendement de l'installation optimal par la limitation de la perte de calories lors du procédé. Afin de maximiser le rendement et de garantir un système adiabatique, le conteneur de TES doit limiter au maximum le transfert de chaleur vers l'extérieur. Chaque conteneur du TES a de préférence un volume compris entre 200 m³ et 1000 m³, typiquement choisi selon l'énergie à stocker. Le conteneur de TES selon l'invention peut être utilisé quelle que soit la taille de l'installation AACAES. Le volume du conteneur et le nombre de conteneurs sont choisis en fonction de la taille du système AACAES visée. Le débit d'air entrant et sortant du conteneur de TES dépend de l'étage où se trouve le conteneur, en particulier dépend de la pression, et est préférentiellement compris entre 20 et 200 m³/h. La température du matériau de stockage est de préférence comprise entre la température ambiante, soit environ 25°C, et 300°C, et de préférence entre la température ambiante et 260°C.

Dans l'installation schématisée à la figure 1, le conteneur de TES 43, c'est-à-dire le conteneur de TES à partir duquel est envoyé l'air au réservoir final 10, est le dispositif de stockage de la chaleur qui impose le plus de contraintes pour le dimensionnement du TES. En effet, c'est celui qui supporte les plus fortes contraintes liées à la compression de l'air. Dans l'exemple donné et illustré à la figure 1, le conteneur de TES 43 présente les caractéristiques suivantes :
- il est apte à contenir un air ayant une température d'environ 260°C maximum ;
- il est apte à être opéré à une pression maximale de 125 bars ;
- il contient 336 m³ d'un matériau de stockage de la chaleur ;
- le matériau de stockage de la chaleur qu'il contient a une densité de 2400 kg/m³, ce qui amène par exemple à une densité apparente de 1200 kg/m³ en considérant un taux de vide de 50% ;
- le matériau de stockage qu'il contient est sous la forme de billes de 10 mm de diamètre.

Plusieurs unités de stockage de l'air comprimé sont représentées sur la figure 1 comme formant le réservoir de stockage d'air final 10, sans que cela constitue une limitation. Le réservoir de stockage de l'air comprimé 10 peut en effet être composé d'une ou plusieurs unités de stockage d'air, par exemple une ou plusieurs cuves, un système de tuyaux, ou une ou plusieurs cavités souterraines. Le volume total du réservoir 10 peut être compris entre 1000 m³ et 7000 m³ dans le cas d'installations AACAES de taille modeste, et peut aller jusqu'à 100 000 m³ selon les applications envisagées.

Le système AACAES comportant un conteneur de TES selon l'invention n'est pas limité à l'exemple de la figure 1. D'autres configurations peuvent être envisagées : un nombre différent d'étages de compression et/ou de détente, l'utilisation de moyens réversibles assurant la compression et la détente permettant de limiter le nombre de dispositifs utilisés dans le système et assurer ainsi un gain en poids et en volume du système, etc.

La figure 2 représente une coupe schématique longitudinale d'un conteneur de TES selon un premier mode de réalisation de l'invention. Seule la moitié du conteneur est représentée, l'autre partie étant symétrique.

Le conteneur 200 du TES est une enceinte, ayant typiquement une forme de colonne disposée sensiblement verticalement, par exemple sur un support 208 tel le sol, une dalle en béton ou tout support approprié au poids du conteneur, comportant, de préférence à son sommet et à sa base, des moyens d'injection et de soutirage 201/202 d'un gaz à refroidir ou à réchauffer, typiquement de l'air. Sur la figure, les flèches illustrent la circulation du gaz dans le conteneur de TES lors de deux phases distinctes de fonctionnement du conteneur, typiquement une phase de charge (phase compression du gaz avec stockage de la chaleur dans le TES) et une phase de décharge (détente du gaz avec restitution de la chaleur au gaz) dans un procédé AACAES. Le conteneur de TES n'est pas limité à une géométrie cylindrique de l'enceinte, mais peut également présenter une autre forme telle qu'une forme parallélépipédique. Un système de tuyauterie (non représenté) est prévu pour relier fluidiquement le conteneur aux autres dispositifs de l'installation AACAES (compresseurs, turbines, etc.), qui peut être en partie situé dans le sous-sol.

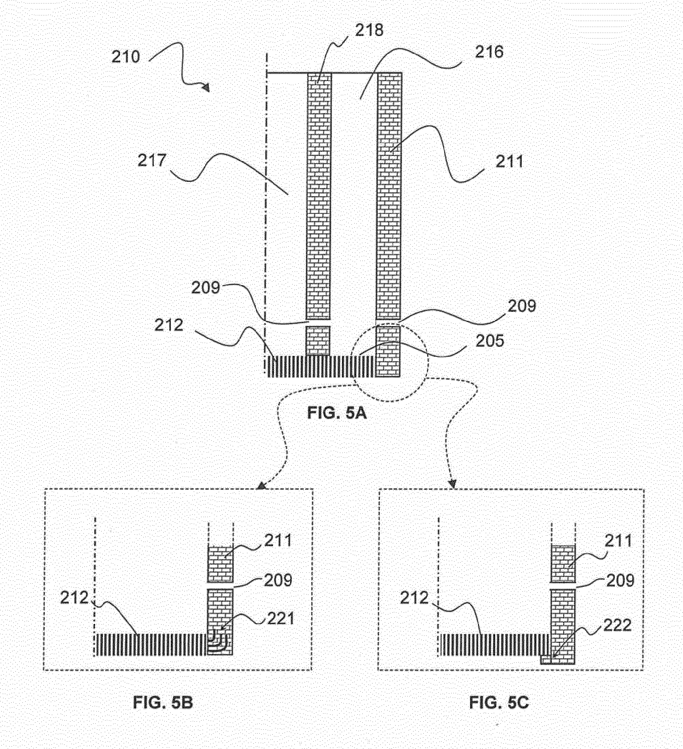

Le conteneur 200 comporte au moins deux modules 210 disposés l'un au-dessus de l'autre, et de préférence une succession de plusieurs modules 210 disposés les uns au-dessus des autres tel que représenté à la figure 2. Par exemple, le conteneur selon l'invention comporte entre 2 et 12 modules 210, de préférence entre 3 et 5 modules 210. Les modules 210 sont positionnés de façon centrée. Le centre de chaque module est sur l'axe principal d'allongement de l'enceinte (représenté en pointillé sur la figure 2), et tous les modules sont sensiblement identiques. La figure 5A illustre schématiquement en coupe un tel module 210. Comme pour la figure 2, seule la moitié du module est représentée, l'autre moitié étant identique par symétrie. Chaque module 210 comporte deux parois latérales en béton 218 et 211 et un fond perforé 205. La première paroi latérale en béton 218 délimite avec le fond perforé un premier volume 217 du module 210, et la deuxième paroi latérale en béton 211 délimite avec la première paroi latérale en béton 218 et le fond perforé 205 un deuxième volume 216 du module 210. Le module 210 comporte ainsi deux volumes, le deuxième volume 216 entourant le premier volume 217, qui sont aptes à recevoir un matériau de stockage de la chaleur et de restitution 207 sous forme de particules formant un lit fixe de particules dans chaque volume 217 et 216 du module 210 (non représenté sur la figure 5A). La présence d'une double enveloppe en béton permet de répartir les efforts au sein de la structure du conteneur.

Le fond perforé 205 du module 210 est en métal selon ce premier mode de réalisation. Il peut être en béton selon d'autres modes de réalisation décrits plus loin. Selon ce premier mode de réalisation, le fond perforé 205 est typiquement une plaque en métal comportant des ouvertures 212 dont la taille est inférieure à celle des particules du matériau de stockage de la chaleur afin de retenir le matériau de stockage de la chaleur, tout en laissant passer le gaz dans le conteneur. Cette grille en métal 205 est bornée par la deuxième paroi latérale en béton 211, et sert de support à la première paroi latérale en béton 218. La deuxième paroi latérale en béton 211 peut être coulée sur la périphérie de la grille en métal 205 afin d'assurer une liaison encastrement 221 (figure 5B). Alternativement, la grille en métal 205 peut reposer sur un épaulement 222 de la deuxième paroi latérale en béton 211 (figure 5C), ce qui facilite les opérations de maintenance.

De préférence, les parois latérales en béton (218, 211) des modules ont une épaisseur comprise entre 50 mm et 500 mm. De préférence, le fond perforé 205 en métal a une épaisseur comprise entre 100 et 300 mm.

Chaque module 210 a de préférence une forme cylindrique, conduisant à un conteneur en forme de colonne. Dans ce cas, les parois latérales en béton 218 et 211 sont cylindriques. Cependant, le module peut présenter une autre forme, par exemple parallélépipédique.

Le conteneur 200 comporte ainsi une pluralité de lits fixes (au moins quatre) de particules de matériaux de stockage et de restitution de la chaleur 207, deux lits étant disposés dans un module 210. Par lit fixe de particules on entend un ensemble de particules agencées de manière aléatoire, qui n'est ni mobile ni fluidisé.

Les modules 210 forment une première enveloppe en béton 203 du conteneur 200, ainsi qu'une deuxième enveloppe en béton 215, intérieure à la première enveloppe 203, c'est-à-dire inclue dans l'espace intérieur de l'enceinte formé par la première enveloppe 203. Plus précisément la première enveloppe en béton 203 est formée par l'ensemble des parois latérales 211 des modules 210, et la deuxième enveloppe en béton 215 est formée par l'ensemble des parois latérales 218 des modules 210. La première enveloppe en béton 203 est entourée par une couche isolante thermiquement 206, elle-même entourée par une coque en acier 204. L'enveloppe en béton 203 est en contact avec la couche isolante 206, elle-même en contact avec la coque en acier 204.

L'enveloppe en béton 203 a de préférence une épaisseur comprise en 50 mm et 500 mm, par exemple une épaisseur de 100 mm. L'enveloppe en béton 203 est apte à contenir le matériau de stockage qui peut être à une température allant jusqu'à 300°C, par exemple une température comprise entre la température ambiante (20°C) et 300°C, de préférence comprise entre 20°C et 260°C. L'enveloppe en béton 203 peut également supporter les contraintes exercées par le matériau de stockage de la chaleur, notamment les contraintes liées au poids du matériau de stockage pouvant représenter quelques centaines de tonnes. Le matériau de stockage et la première enveloppe en béton 203 sont contenus dans une coque en acier 204, séparée de la première enveloppe 203 par la couche isolante thermiquement 206. Les enveloppes en béton (203, 215) et la couche isolante 206 ne sont pas étanches à la pression c'est-à-dire qu'il n'y a pas de différence de pression de part et d'autre de chaque enveloppe en béton, et de la couche isolante. Ainsi, c'est la coque en acier qui reprend la pression interne du conteneur. Par pression interne du conteneur on entend la pression d'air en fonctionnement. De cette façon, la première enveloppe 203 est en équipression et la coque en acier n'est soumise qu'à l'effort dû à cette pression interne. Le conteneur 200 comporte de préférence au moins un trou d'équipression 209, qui est une ouverture dans l'enveloppe 203 formant un passage entre l'intérieur de l'enceinte et la couche isolante 206, permettant de transmettre la pression interne de l'enceinte vers la coque en acier 204. De préférence le conteneur 200 comporte plusieurs trous d'équipression 209, par exemple disposés dans les parois latérales de chaque module en béton 210.

La première enveloppe en béton 203 est principalement soumise à des efforts de compression sous des conditions de température modérée, typiquement allant jusqu'à environ 300°C. Les parois latérales des modules 210 peuvent être constituées de bétons ordinaires ou haute performances (BHP), qui peuvent être soumis à ce type de contraintes sans dégradation significative de leur performances mécaniques aux températures d'opération visées. Des bétons réfractaires et des bétons armés peuvent être également employés. La conductivité thermique des enveloppes en béton 203 est de préférence comprise entre 0,1 et 2 W.m⁻¹.K⁻¹.

La présence d'une double enveloppe en béton (215 et 203) permet de répartir les efforts au sein de la structure du conteneur. La double enveloppe en béton permet en effet au conteneur de mieux résister aux contraintes mécaniques exercées par le matériau de stockage de la chaleur 207. Le positionnement de l'enveloppe 215 peut être réalisé par une butée portée par la plaque 205.

La couche isolante 206 permet de limiter la température de fonctionnement de la coque en acier en limitant le transfert thermique. La couche isolante 206 permet également de faciliter le dimensionnement de la coque en acier en autorisant une contrainte faible concernant la température, en particulier un dimensionnement avec une température pouvant être inférieure ou égale à 50°C, voire proche de la température ambiante au lieu d'un dimensionnement à température maximale de service qui est de 300°C. L'épaisseur de la couche isolante est de préférence telle que, en utilisation, la température de la coque en acier est inférieure ou égale à 50°C. La couche isolante 206 n'est pas étanche à la pression. Cette perméabilité à la pression autorise un fonctionnement en équipression grâce à la transmission de la pression à la coque en acier 204. De préférence la couche isolante a une porosité telle qu'elle n'est pas étanche à la pression. La conductivité thermique de la couche isolante 206 est de préférence comprise entre 0,01 et 0,17 W.m⁻¹.K⁻¹. La couche isolante 206 a de préférence une épaisseur comprise en 50 mm et 400 mm, par exemple une épaisseur de 100 mm. L'épaisseur de la couche isolante 206 peut être réduite en choisissant un béton réfractaire pour former les modules en béton 210 (conductivité thermique réduite d'un béton réfractaire, typiquement divisée par deux par rapport à un béton armé ordinaire). L'épaisseur de la couche isolante dépend également de la nature du matériau choisi pour former cette couche. La couche isolante est de préférence une couche de laine de roche. D'autres matériaux peuvent également être utilisés pour former la couche isolante 206, tels que la perlite, la laine de verre, le verre cellulaire, une lame d'air.

La coque en acier 204, qui constitue l'enveloppe externe du conteneur 200, permet de résister à la pression interne du conteneur. Son épaisseur est dépendante de la sollicitation en pression. De préférence, l'épaisseur de la coque en acier ne dépasse pas 300 mm afin d'être compatible avec les moyens de fabrication connus à ce jour (forge, roulage et soudage). La conductivité thermique de la coque en acier 204 est de préférence comprise entre 20 et 250 W.m⁻¹.K⁻¹. Divers aciers peuvent être utilisés pour fabriquer la coque 204. Typiquement, la coque est en acier non-allié d'usage général, tel que l'acier P355GH.

La structure en sandwich formée par la succession, de l'intérieur vers l'extérieur du conteneur 200, de la première enveloppe en béton 203, de la couche isolante 206 et de la coque en acier 204, permet :
- de découpler les contraintes de reprise de poids du matériau de stockage et de pression interne. Une structure propre est dédiée à chaque sollicitation : le poids du matériau de stockage est supportée par la première enveloppe en béton 203 (aidée de la deuxième enveloppe en béton 215), et la pression interne est supportée par la coque en acier 204;
- de réaliser un dimensionnement de la coque en acier à température ambiante grâce à la couche isolante, permettant ainsi de réduire l'épaisseur de la coque en acier, ce qui aboutit à un gain important sur la masse d'acier utilisée, et par conséquent une réduction des coûts, comparativement à un dimensionnement pour une température de l'ordre de 300°C , mais également ce qui permet d'obtenir des épaisseurs compatibles avec les moyens de production de la coque en acier. En effet, réaliser un conteneur de TES comportant une enceinte en acier ayant une température de fonctionnement très supérieure à 50°C, par exemple 260°C, pour les hautes pressions visées, représente un défi technologique, en particulier pour un diamètre de réservoir supérieur à 1 m. Typiquement, en prenant un acier tel que ceux couramment utilisés pour former les appareils à pression (ESP), par exemple un acier de type P355GH, l'épaisseur de la paroi acier atteint une épaisseur d'au minimum 150 mm. Ceci constitue une limite de fabrication qui complique la mise en forme de l'acier, l'assemblage par soudure mais aussi le transport, car la masse des réservoirs peut atteindre quelques centaines de tonnes ;
- de réaliser des réservoirs de plus gros diamètre, typiquement de l'ordre de 4 m.

Avantageusement, les modules 210 comportant des parois latérales en béton (218, 211) qui est un matériau apte à stocker la chaleur du gaz traversant le conteneur, les modules 210 en tant que tels participent activement au stockage de la chaleur dans le conteneur de TES. Ainsi, il est possible d'augmenter la capacité de stockage de la chaleur du conteneur de TES liée initialement au seul matériau de stockage de la chaleur sous forme de particules en lits fixes et/ou de réduire la masse de matériau de stockage au sein du conteneur pour une même capacité de stockage de la chaleur.

Le module 210 a donc plusieurs fonctions, notamment celles de former l'enceinte du conteneur, de participer au stockage et à la restitution de la chaleur, de servir de support au matériau granulaire de stockage de la chaleur, et d'assurer une bonne répartition du matériau granulaire de stockage de la chaleur dans le conteneur ce qui améliore les échanges thermiques entre le gaz et les particules du matériau de stockage avec le gaz et ce qui évite le tassement en fond du conteneur pouvant fragiliser la structure du conteneur.

Le matériau de stockage de la chaleur est sous forme de particules disposées de manière à former deux lits fixes dans chaque module 210, soit un lit fixe dans chacun des volumes 217 et 216 formés dans le module 210. Le matériau de stockage de la chaleur est ainsi un matériau granulaire apte à stocker et à restituer de la chaleur, qui peut être, sans être limitatif, un béton, une céramique, de l'amiante, des graviers.

La forme et la taille des particules peuvent varier, et ces paramètres sont choisis de manière à garantir le passage de l'air à travers le lit, et à assurer un contact efficace entre le gaz et les particules afin d'optimiser les échanges de chaleur. De préférence, les particules sont sensiblement sphériques, et ont un diamètre moyen compris entre 1 et 20 mm

Selon une configuration, les particules du matériau de stockage de la chaleur sont en béton. L'utilisation du même matériau pour les particules et pour au moins une partie des modules 210 (les parois latérales) permet de minimiser les problèmes liés aux différences de dilatation thermique entre le matériau de stockage de la chaleur et les modules 210 contenant ledit matériau.

Les particules, typiquement des billes, du matériau de stockage de la chaleur sont de préférence dimensionnées de manière à prendre en compte la dilatation thermique des particules et celle des modules lors du fonctionnement du conteneur, notamment afin d'éviter tout phénomène de blocage. Lorsque la température dans l'enceinte augmente, les modules se dilatent et par conséquent le matériau granulaire de stockage de la chaleur peut combler l'augmentation de volume. Lorsqu'une phase de refroidissement survient, les modules réduisent de diamètre et peuvent comprimer le matériau granulaire et générer ainsi des sur contraintes néfastes pour la structure.

Par exemple, le matériau de stockage de la chaleur est en béton et sous forme de billes d'un diamètre supérieur ou égal à 10 mm.

Le conteneur 200 selon l'invention permet de stocker la chaleur provenant d'un gaz chaud, le stockage étant réalisé par les particules de matériau de stockage de la chaleur 207. Le conteneur permet également de restituer la chaleur stockée dans les particules à un gaz froid. Le gaz entre ou sort dans le conteneur 200 par ses extrémités, au niveau des moyens d'injection et de soutirage 201/202, et échange de la chaleur avec les particules du matériau de stockage et de restitution de la chaleur 207 qui sont disposées sous forme de lits permettant le passage du gaz à travers ceux-ci. Le passage du fluide dans le lit fixe de particules est sensiblement axial, c'est-à-dire que le fluide circule de manière globale selon l'axe principal défini entre les points d'entrée et de sortie du gaz dans le conteneur 200, typiquement situés à deux extrémités opposées du conteneur 200. Typiquement le passage du gaz se fait sensiblement selon la verticale. Selon cette configuration, lors de la charge, le fluide entre chaud, à une température T₁, par le haut du conteneur, et sort froid (refroidi par les particules qui stockent une partie de la chaleur du gaz), à une température T₂ (T₂<T₁), par le fond du conteneur. Pour la décharge, le gaz entre froid, à une température T₂, par le fond du conteneur, et sort chaud (chauffé par les particules qui restituent une partie de la chaleur des particules), à une température T₁ par le haut du conteneur. La configuration décrite constitue une configuration préférée dans laquelle le conteneur comprend une zone chaude dans sa partie supérieure, due à l'entrée du gaz chaud lors de la phase de charge et à la sortie du gaz réchauffé lors de la décharge, et une zone froide dans la partie inférieure due à la sortie du gaz refroidi lors de la phase de charge et l'entrée du gaz froid lors de la phase de décharge. Une zone chaude dans la partie supérieure permet notamment de minimiser le mouvements d'air lors d'une phase d'attente avant la phase de décharge. Cependant, le conteneur peut être utilisé selon une configuration inversée dans laquelle la zone chaude se situe dans sa partie inférieure et la zone froide dans la partie supérieure. Dans ce cas, lors de la phase de charge, le gaz chaud à refroidir arrive à une température T₁, par le bas du conteneur et sort froid, à une température T₂ (T₂<T₁), par le haut du conteneur, et lors de la décharge, le gaz entre froid, à une température T₂, par le haut du conteneur, et sort chaud à une température T₁, par le bas du conteneur.

Avantageusement, le conteneur de TES selon l'invention est apte à fonctionner à des pressions comprises entre 1 bar et 300 bars, en particulier entre 100 bars et 300 bars, et plus particulièrement entre 100 et 150 bars, et à des températures comprises entre la température ambiante, généralement de 20°C, et 300°C, de préférence entre la température ambiante et 260°C.

Selon une configuration particulière, le conteneur de TES ne forme pas un seul réservoir mais comprend plusieurs enceintes définies chacune comme précédemment décrit pour l'enceinte du conteneur de TES illustré à la figure 2, c'est-à-dire comportant, de préférence à son sommet et sa base, des moyens d'injection et de soutirage du gaz, chaque enceinte étant délimitée par une première enveloppe en béton entourée par une couche isolante thermiquement, elle-même étant entourée d'une coque en acier. Chaque enceinte comporte au moins deux modules en béton disposés l'un au-dessus de l'autre de manière centrée pour former la première enveloppe en béton et une deuxième enveloppe en béton. Chaque module en béton comprend au moins un premier volume délimité par une première paroi latérale en béton et un fond perforé et un deuxième entourant le premier volume et délimité par la première paroi latérale, par une deuxième paroi latérale en béton, et par le fond perforé. Les premier et deuxième volumes contiennent chacun un lit fixe de particules d'un matériau de stockage et de restitution de chaleur. Les différentes enceintes communiquent fluidiquement et sont montées en série et/ou en parallèle pour former un conteneur de TES composé d'éléments de taille et de poids réduits. Le montage en série et/ou parallèle s'entend relativement au gaz envoyé dans les enceintes du conteneur de TES : dans un montage en série, le gaz traverse successivement les différentes enceintes du conteneur de TES, alors que dans un montage en parallèle, le flux de gaz à refroidir/chauffer est divisé entre plusieurs sous flux injecté chacun dans une enceinte du conteneur de TES.

La présente invention couvre aussi une configuration où chaque module comporte plus de deux volumes, par exemple trois ou quatre volumes, aptes à recevoir un lit fixe de particules d'un matériau de stockage et de restitution de chaleur. Dans ce cas chaque volume est défini entre deux parois latérales en béton, l'une des parois entourant l'autre. Le module comprend alors au moins trois parois latérales en béton, de préférence des parois latérales cylindriques.

Le conteneur de TES selon l'invention est de préférence utilisé dans un système AACAES tel que décrit en relation avec la figure 1. Cependant, l'usage du conteneur de TES selon l'invention n'est pas limité au stockage d'énergie par air comprimé de type AACAES. Le conteneur de TES selon l'invention peut également être utilisé dans d'autres applications où un stockage et une restitution de la chaleur d'un gaz sont requises, dans des conditions de pressions élevées, par exemple pour une utilisation dans des réseaux de chaleur, ou dans les centrales solaires thermiques à concentration. Ces différentes applications nécessitent des moyens de stockage de l'énergie si cette dernière n'est pas consommée lors de sa production. Par conséquent, l'énergie disponible sous forme de flux de chaleur peut être stockée dans un système de stockage et de restitution de la chaleur (TES) selon l'invention comportant au moins un conteneur tel que décrit.

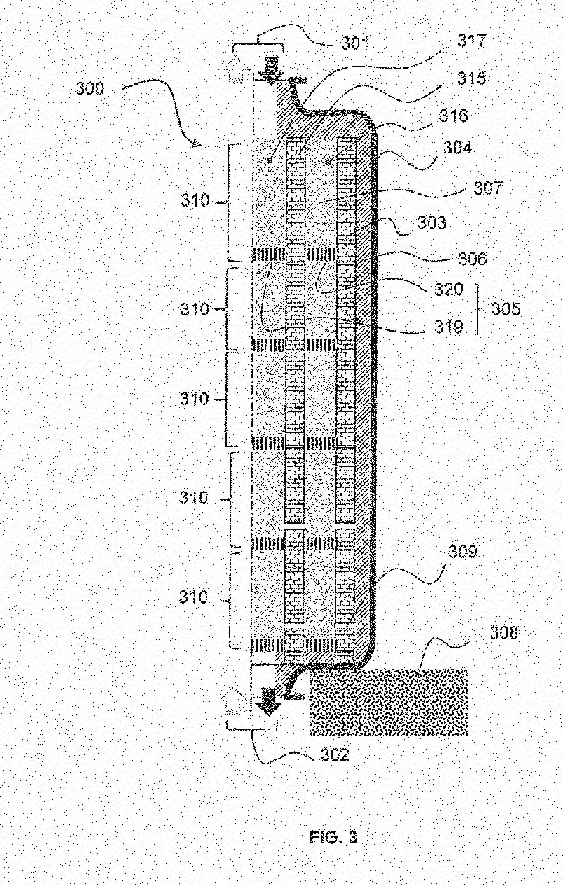

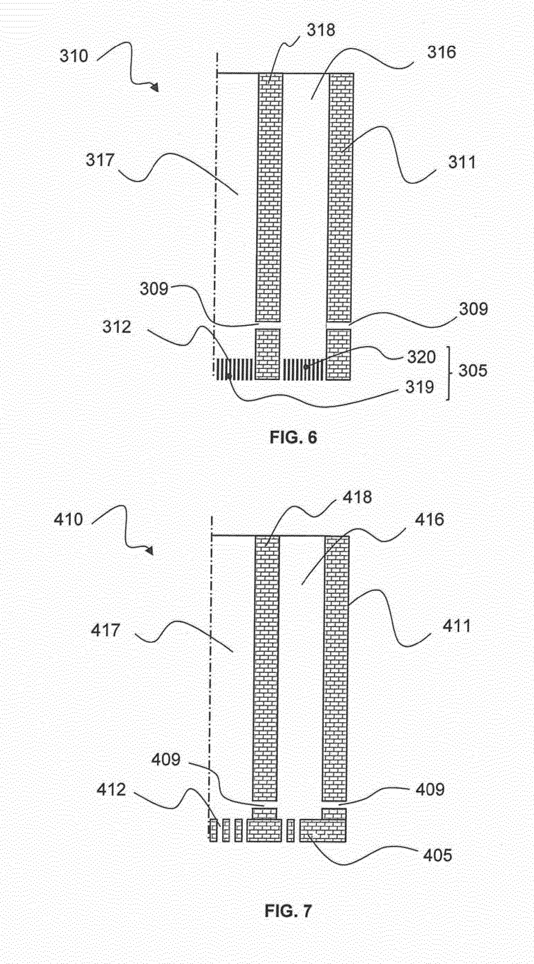

Une variante du premier mode de réalisation du conteneur de TES selon l'invention est illustrée à la figure 3. Seuls les modules diffèrent entre le premier mode de réalisation et cette variante. Selon cette variante, les modules 310, également illustrés à la figure 6, comportent chacun un fond perforé en métal comprenant :
- une première grille en métal 319 bornée par la première paroi latérale en béton 318, et
- une deuxième grille en métal 320 bornée par les première et deuxième parois latérales en béton 318 et 311.

Dans le cas de modules cylindriques avec des parois latérales cylindriques, la première grille en métal 319 a une forme de disque, et la deuxième grille en métal a une forme en anneau.

La superposition des modules 310, de manière centrée, permet alors d'obtenir la première enveloppe 303 et la deuxième enveloppe 315 du conteneur 300, comme dans le premier mode de réalisation. La deuxième enveloppe 315 diffère de l'enveloppe 215 du conteneur 200 selon le premier mode de réalisation illustré à la figure 2 en ce qu'elle est constituée sur toute sa hauteur par le béton des parois latérales 318 des modules 310, alors que dans le cas du conteneur 200 illustré à la figure 2, la deuxième enveloppe en béton 215 est en quelques sorte discontinue car interrompue à différents niveaux sur toute sa hauteur par la présence de la grille unique de chaque module 210 qui sert de support à la paroi latérale en béton 217 du module 210.

Selon cette variante, le poids des parois latérales 318 des modules n'est avantageusement pas supporté par le fond perforé 305.

Les autres éléments du conteneur 300 illustré aux figures 3 et 6 sont identiques à ceux du conteneur 200 illustré aux figures 2 et 5, ainsi que les avantages associés, et leur description n'est pas reprise ici. On comprendra notamment que les références 301, 302, 304, 306, 307, 308, 309, 311, 312, 316, 317 désignent des éléments identiques à ceux référencés 201, 202, 203, 204, 206 à 209, 211, 212, 216 et 217.

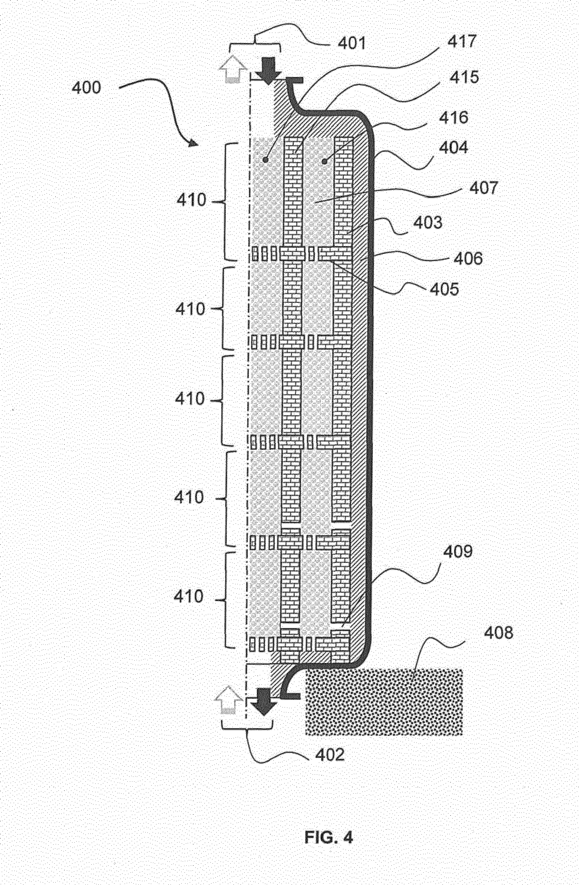

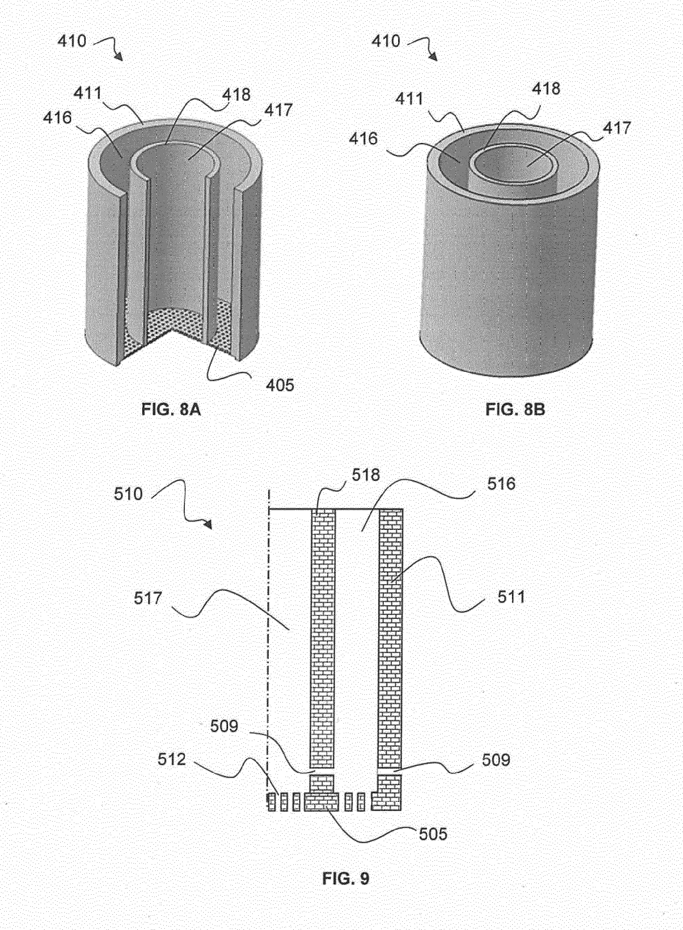

Un deuxième mode de réalisation du conteneur de TES selon l'invention est illustrée à la figure 4. Seuls les modules diffèrent entre ce deuxième mode de réalisation et le premier mode de réalisation (et sa variante). Selon ce deuxième mode de réalisation, les modules 410, également illustrés aux figures 7, 8A et 8B, comportent chacun un fond perforé en béton 405. Les bétons utilisés sont de même nature que ceux des parois latérales des modules.

Le fond 405 du module 410 est typiquement une plaque en béton comportant des ouvertures 412 dont la taille est inférieure à celle des particules du matériau de stockage de la chaleur afin de retenir le matériau de stockage de la chaleur, tout en laissant passer le gaz dans le conteneur. Le fond perforé en béton 405 et les parois latérales en béton 411 et 418 forment trois entités distinctes, formées par un matériau de même nature, i.e. un béton. Les parois 411 et 418 reposent sur la plaque en béton 405. Les parties de la plaque 405 supportant les parois 411 et 418 sont de préférence non perforées afin d'assurer une épaisseur en béton plein pour les enveloppes 403 et 415 au moins égale à celles respectivement des parois 411 et 418. Alternativement à la configuration où la paroi latérale 411 repose sur la plaque en béton 405, la paroi latérale 411 peut comporter une gorge dans laquelle se loge la périphérie de la plaque en béton 405 constituant le fond du module 410 (configuration visible sur la vue 3D partielle du module 410 de la figure 8A). Dans ce cas la partie de la plaque 405 s'insérant dans la gorge de la paroi 411 est de préférence non perforée afin d'assurer une épaisseur en béton plein au moins égale à celle de la paroi 411 à la jonction paroi/fond du module.

Dans le cas de modules cylindriques avec des parois latérales cylindriques, la plaque en béton a une forme de disque.

Les modules 410 étant formés de parois latérales et de fonds constitués d'un même matériau, i.e. du béton, on prévient ainsi les problèmes de dilatation thermique différentielle connus dans les dispositifs de l'art antérieur.

En outre, les modules 410 comportant non seulement des parois latérales en béton (418, 411) mais également un fond perforé en béton 405, les modules 410 en tant que tels participent activement au stockage de la chaleur dans le conteneur de TES, le béton étant en effet un matériau apte à stocker la chaleur du gaz traversant le conteneur. Ainsi, il est possible d'augmenter d'autant plus la capacité de stockage de la chaleur du conteneur de TES liée initialement au seul matériau de stockage de la chaleur sous forme de particules en lits fixes et/ou de réduire la masse de matériau de stockage au sein du conteneur pour une même capacité de stockage de la chaleur.

En outre, dans le cas où les particules du matériau de stockage de la chaleur sont en béton, l'utilisation du même matériau pour les particules et pour les modules en béton 410 permet de garantir une dilatation thermique sensiblement identique des particules et des modules accueillant les particules, évitant ainsi toute contrainte mécanique supplémentaire dans le conteneur.

Les autres éléments du conteneur 400 illustré aux figures 4 et 7, 8A et 8B sont identiques à ceux du conteneur 200 illustré aux figures 2 et 5, ainsi que les avantages associés, et leur description n'est pas reprise ici. On comprendra notamment que les références 401, 402, 404, 406, 407, 408, 409, 411, 412, 416, 417 désignent des éléments identiques à ceux référencés 201, 202, 203, 204, 206 à 209, 211, 212, 216 et 217.

Selon une variante du deuxième mode de réalisation du conteneur de TES selon l'invention, les modules sont des modules en béton monoblocs. Un tel module en béton monobloc est illustré à la figure 9. Le module en béton 510 est formé d'une seule pièce en béton, plus précisément la paroi latérale en béton 511 et le fond perforé en béton 505 forment une seule pièce en béton. Le module en béton 510 comporte une paroi latérale 511 se prolongeant par un fond 505 perforé dont les ouvertures 512 permettent le passage du gaz dans le conteneur. De préférence, la paroi latérale 518 est également unitaire avec l'ensemble formé par la fond perforé 505 et la paroi latérale 511. Comme pour le module en béton 410, les problèmes de dilatations différentielles sont réduits du fait de la même nature de matériau pour le fond et les parois du module 510, et le module 510 en tant que tel participe au stockage et à la restitution de la chaleur du gaz traversant le conteneur.

Cette configuration est en outre particulièrement avantageuse pour la fabrication du conteneur de TES. En effet, les modules entiers peuvent être préfabriqués et ainsi faciliter le montage du conteneur par empilement des modules d'une seule pièce. Les modules peuvent également être pré-remplis avec le matériau de stockage de la chaleur avant leur assemblage pour former le conteneur.

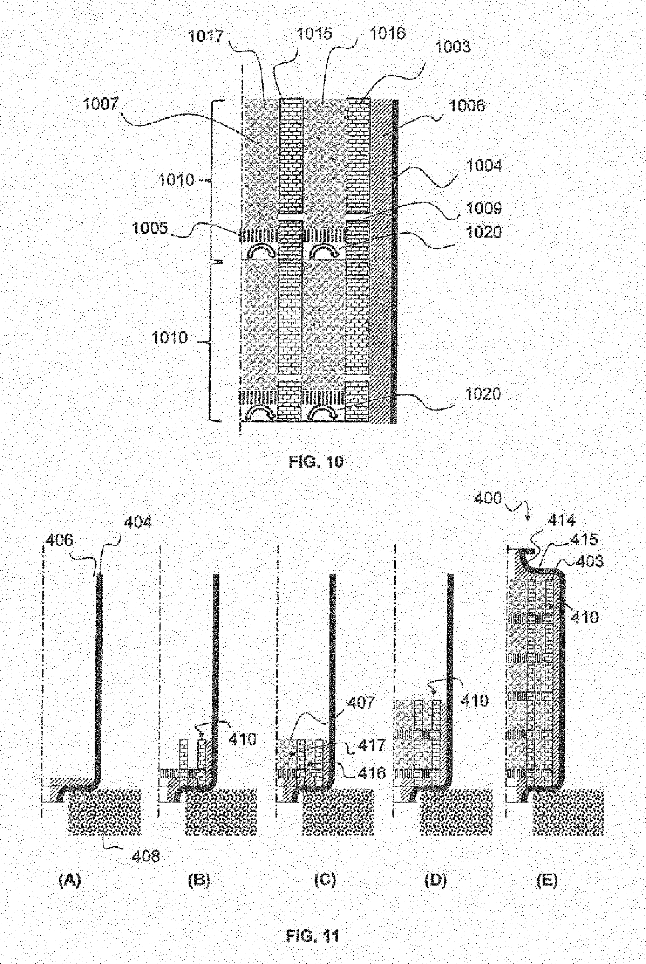

Selon une autre variante des premier et deuxième modes de réalisation du conteneur selon l'invention, les modules comportent des espaces d'homogénéisation du gaz situés sous les fonds perforés. Une telle configuration est illustrée à la figure 10, pour le cas d'un conteneur de TES selon la variante du premier mode de réalisation comportant des modules avec deux grilles en métal en guise de fond perforé. Sur la figure 10, deux modules successifs du conteneur sont représentés. Les éléments référencés 1003, 1004, 1005, 1006, 1007, 1009, 1015, 1016, 1017 désignent des éléments identiques à ceux référencés 303, 304, 305, 306, 307, 309, 315, 316, 317. Leur description, et celle des avantages associés, ne sont pas répétées ici.

Selon cette variante de réalisation, chaque module 1010 du conteneur de TES comporte une zone d'homogénéisation du gaz 1020 placée sous le fond perforé 1005 et vide de tout matériau de stockage de la chaleur 1007. Une telle zone permet d'assurer une homogénéisation de la température du gaz à chaque étage (module) dans le conteneur.

La figure 11 illustre un exemple non limitatif de montage du conteneur de TES selon l'invention. Les schémas (A) à (E) illustrent la succession des étapes du montage du conteneur de TES selon l'invention. L'exemple d'un conteneur de TES selon le deuxième mode de réalisation illustré à la figure 4 est choisi pour illustrer le procédé de montage, ce dernier s'appliquant aux autres modes de réalisation du TES selon l'invention. Selon cet exemple de montage, on réalise les étapes ci-dessous.

Une première étape (schéma (A)) d'installation sur site de la coque en acier 404 dépourvue de son chapeau de couverture 414, et de la couche isolante 406 est réalisée. La coque en acier peut également être désignée sous le terme de virole. La coque en acier 404 est déposée sur un support 408, e.g. le sol.

Avantageusement, la coque en acier est préfabriquée, c'est-à-dire que la chaudronnerie de la coque est réalisée en atelier, et est acheminée en un seul bloc sur le lieu du montage. Dans ce cas, seul la soudure ou l'assemblage du couvercle 414 est réalisé sur le site du montage après avoir inséré les modules en béton 410 et le matériau de stockage de la chaleur dans la coque en acier et placé l'isolant entre les modules en béton et la coque en acier.

Alternativement, la coque en acier 404 est partitionnée en plusieurs éléments qui sont acheminés sur le site du montage et assemblés par soudage sur site.

Une deuxième étape (schémas (B) à (C)) de montage des modules en béton, de mise en place de la couche isolante 406, et de remplissage des modules par le matériau de stockage de la chaleur 407 est réalisée.

Une fois installée la coque en acier 404, chaque étage du conteneur comportant un module est de préférence monté comme suit, dans cet ordre :
- mise en place du module béton. En particulier, on met en place le fond 405 et la paroi externe 418, puis la paroi interne 418;
- installation de l'isolant entre la paroi en béton externe 418 et la coque acier 404. L'isolant peut être typiquement de la laine de roche en vrac ou en rouleau ;
- remplissage du module béton avec le matériau de stockage 407 choisi.

Le premier module en béton 410 inséré au sein de la coque en acier par le sommet ouvert de la coque 404, vient reposer sur le fond de la coque préalablement isolé thermiquement.

Lors du montage des modules successifs, on s'assure du centrage des modules les uns par rapport aux autres lors de leur empilement, afin de créer une paroi continue de la première enveloppe en béton 203 et de créer l'enveloppe en béton 415.

Selon une alternative, les modules en béton 410 peuvent être remplis avec le matériau de stockage de la chaleur 207 avant l'installation de l'isolant 206 entre la paroi en béton externe 418 et la coque acier 404.

Selon une autre alternative, les modules en béton 410 peuvent être remplis par le matériau de stockage de la chaleur 407 avant leur insertion dans la coque en acier 404.

On réalise une troisième étape de fermeture du conteneur 400 par assemblage de la coque 404 avec son couvercle en acier 414 préalablement isolé thermiquement, de préférence par soudage du couvercle 414 avec la paroi en acier de la coque 404.

La mise en place d'autres dispositifs, tels que les moyens d'injection et de soutirage du gaz n'est pas détaillée, celle-ci étant aisément conçue par l'homme du métier.

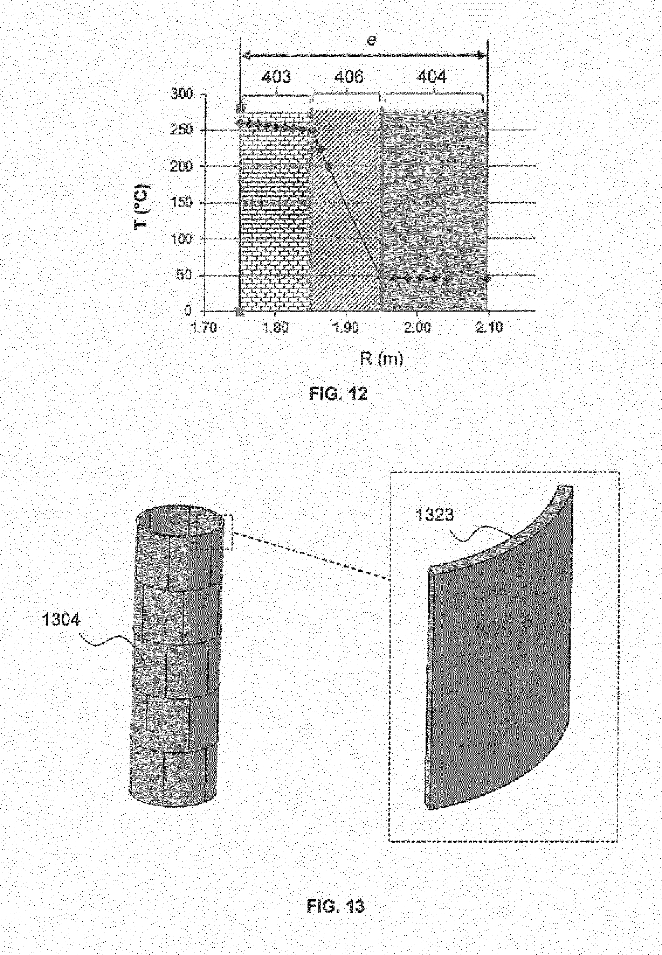

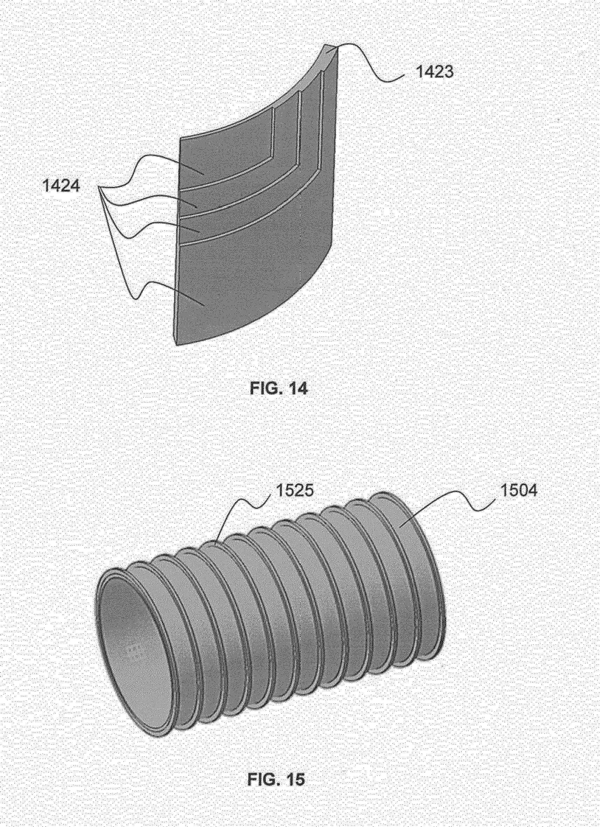

La fabrication de la coque en acier 404 peut être réalisée selon différentes techniques :
- la coque en acier peut être assemblée par soudage de tôles cintrées d'une seule épaisseur. La figure 13 illustre une telle coque 1304, composée par des tôles d'une seule épaisseur 1323 soudées. Des tôles initialement plates sont cintrées pour obtenir le rayon de l'enceinte, et sont ensuite assemblées par soudure pour former la coque en acier qui a une paroi monocouche.
- la coque en acier peut également être assemblée par soudage de tôles cintrées en multicouches afin de travailler avec des épaisseurs de tôle unitaire plus faibles que l'épaisseur d'une tôle utilisée pour former une coque monocouche. Une partie d'une telle coque est illustrée à la figure 14 où l'on peut voir plusieurs couches 1424 de tôles qui sont superposées pour former la paroi 1423 de la coque acier. Cette technique permet de faciliter le travail de mise en forme de la tôle. Selon cette technique de fabrication, on peut assembler les couches supérieures avec une prétention afin de réaliser une coque multicouches avec frettage sur les couches extérieures. La mise en compression des couches inférieures leur permet de supporter des contraintes plus importantes ou de supporter un contrainte similaire tout en étant de plus faibles épaisseurs, ce qui a pour avantage d'optimiser la quantité d'acier nécessaire à la construction.
- la coque en acier peut aussi être fabriquée à partir de l'assemblage, de préférence par soudage, de tôles cintrées d'une seule épaisseur, telle la coque monocouche illustrée à la figure 13, qui sont renforcées par des anneaux circonférentiels. Cette technique permet d'obtenir une coque à paroi de faible épaisseur et résistante à de fortes sollicitations de pression. La figure 15 est un dessin en 3D illustrant une telle coque en acier raidie 1504 par la présence d'anneaux circonférentiels 1525. La coque en acier a une forme cylindrique, et comporte une pluralité d'anneaux circonférentiels 1525 de renfort (au nombre de 12 dans la figure 13). Les anneaux circonférentiels 1525 sont de préférence réalisés en métal, en particulier en acier.

### Exemple

Un exemple chiffré d'un conteneur de TES selon l'invention, utilisé dans un système AACAES tel que représenté à la figure 1 en tant que dernier conteneur 43 avant passage du gaz dans le réservoir final 10 (ou premier conteneur quand le gaz sort du réservoir 10), est donné ci-dessous.

Un conteneur de TES selon l'invention comprend par exemple une enceinte comprenant deux volumes formés par deux enveloppes en béton 415 et 403, tel que représenté à la figure 4, ayant pour diamètre interne respectif 1,8 m et 3,5 m, et une épaisseur de 100 mm, et pouvant supporter une température élevée de l'ordre de 260°C. Ces parois en béton sont en équipression grâce aux trous 409 qu'elles comportent. Une couche isolante 406 en laine de roche, d'une épaisseur de 100 mm, est placée entre l'enveloppe en béton externe 403 et la coque en acier 404, permettant de limiter la température de la paroi en acier de la coque à 50°C. La coque en acier a un diamètre interne de 3,9 m, et est épaisse de 146 mm. Un tel conteneur de TES développe un volume interne de 672 m³, permettant de contenir 806 tonnes d'un matériau de stockage ayant par exemple une densité de 2400 kg/m³ avec une porosité de 50% (densité apparente de 1200 kg/m³). Cinq étages formés par l'empilement de cinq modules en béton 410, de 14 m de haut chacun, peuvent être prévus pour former le conteneur d'une hauteur totale de l'ordre de 70 m (cette hauteur ne tient pas compte des dimensions des dispositifs à la base et au sommet du conteneur).

La figure 12 illustre l'évolution de la température (température en ordonnée en °C) au sein de la paroi multicouches (rayon du conteneur en abscisse en mètres) de cet exemple de conteneur de TES selon l'invention, la paroi étant formée par l'enveloppe en béton 403, la couche isolante 406 et la coque en acier 404. L'épaisseur totale e de la paroi du conteneur de TES est de 346 mm, avec respectivement une épaisseur de la première enveloppe en béton 403 de 100 mm, une épaisseur de la couche isolante 406 de 100 mm, et une épaisseur de la coque en acier 404 de 146 mm. On voit qu'avec une température de 260°C dans l'enceinte du conteneur, on passe à une température inférieure à 50 °C dans la coque en acier 404.

Pour la fabrication d'un tel conteneur de TES, 270 tonnes de béton et 1000 tonnes d'acier sont nécessaires.

## Revendications

1. Conteneur (200, 300, 400) d'un système de stockage et de restitution de la chaleur (40), comprenant une enceinte comportant des moyens d'injection et de soutirage (201/202, 301/302, 401/402) d'un gaz à refroidir ou réchauffer, ladite enceinte étant délimitée par une première enveloppe en béton (203, 303, 403, 1003) entourée par une couche isolante thermiquement (206, 306, 406, 1006), ladite couche isolante (206, 306, 406, 1006) étant entourée d'une coque en acier (204, 304, 404, 1004), et **caractérisé en ce que** ladite enceinte comporte au moins deux modules (210, 310, 410, 510, 1010) chaque module (210, 310, 410, 510, 1010) comprenant au moins :
- un premier volume (217, 317, 417, 517, 1017) délimité par une première paroi latérale en béton (218, 318, 418, 518) et un fond perforé (205, 305, 405, 505, 1005) ;
- un deuxième volume (216, 316, 416, 516, 1016) entourant ledit premier volume (217, 317, 417, 517, 1017) et délimité par la première paroi latérale (218, 318, 418, 518), par une deuxième paroi latérale en béton (211, 311, 411, 511, 1011), et par le fond perforé (205, 305, 405, 505, 1005) ;
lesdits premier et deuxième volumes étant aptes à contenir chacun un lit fixe de particules d'un matériau de stockage et de restitution de chaleur (207, 307, 407, 507, 1007), et
lesdits modules (210, 310, 410, 510, 1010) étant disposés l'un au-dessus de l'autre de manière centrée tel que les deuxièmes parois latérales (211, 311, 411, 511, 1011) forment la première enveloppe en béton (203, 303, 403, 1003) et les premières parois latérales (218, 318, 418, 518) forment une deuxième enveloppe en béton (215, 315, 415, 1015), les première et deuxième enveloppes en béton et la couche isolante (206) étant non étanches à la pression.

2. Conteneur selon la revendication 1, dans lequel le fond perforé (205, 305) est en métal.

3. Conteneur selon la revendication 2, dans lequel le fond perforé (205) de chaque module (210) comporte une grille unique en métal bornée par la deuxième paroi latérale en béton (211), et supportant la première paroi latérale en béton (218).

4. Conteneur selon la revendication 2, dans lequel le fond perforé (305) de chaque module (310) comporte une première grille en métal (319) bornée par la première paroi latérale en béton (318) et une deuxième grille en métal (320) bornée par les première et deuxième parois latérales en béton (318, 311).

5. Conteneur selon la revendication 1, dans lequel le fond perforé de chaque module (410, 510) est en béton (405, 505).

6. Conteneur selon la revendication 5, dans lequel les modules (510) sont des modules en béton monoblocs.

7. Conteneur selon l'une des revendications précédentes, dans lequel le matériau de stockage et de restitution de la chaleur (207) est sous forme de particules en béton.

8. Conteneur selon l'une des revendications précédentes en forme de colonne, dans lequel les premières (218, 318, 418, 518) et deuxièmes (211, 311, 411, 511, 1011) parois latérales en béton des modules (210, 310, 410, 510, 1010) sont cylindriques.

9. Conteneur selon l'une des revendications précédentes, comportant des trous d'équipression (209, 309, 409, 509, 1029) dans les première et deuxième enveloppes en béton (203, 303, 403, 1003 / 215, 315, 415, 1015).

10. Conteneur selon l'une des revendications précédentes, dans lequel chaque module (1010) comporte en outre une zone d'homogénéisation du gaz (1020) placée sous le fond perforé (1005) et vide de tout matériau de stockage de la chaleur (1007).

11. Conteneur selon l'une des revendications précédentes, dans lequel la conductivité thermique est comprise entre :
- 0,1 et 2 W.m⁻¹.K⁻¹ pour les enveloppes en béton (203,215,303,315,403,415,1003,1015),
- 0,01 et 0,17 W.m⁻¹.K⁻¹ pour la couche isolante (206, 306, 406, 1006), et
- 20 et 250 W.m⁻¹.K⁻¹ pour la coque en acier (204, 304, 404, 1004).

12. Conteneur selon l'une des revendications précédentes, dans lequel l'épaisseur de la couche isolante (206, 306, 406, 1006) est telle que, en utilisation, la température de la coque en acier (204, 304, 404, 1004) est inférieure ou égale à 50°C, et dans lequel la couche isolante est de préférence choisie parmi une couche de laine de roche, de perlite, de la laine de verre, de verre cellulaire, une lame d'air, et plus préférentiellement est une couche de laine de roche.

13. Conteneur selon l'une des revendications précédentes, comportant entre 2 et 12 modules en béton (210, 310, 410, 510, 1010).

14. Conteneur selon l'une des revendications précédentes, dans lequel l'enceinte a un volume compris entre 200 m³ et 1000 m³.

15. Conteneur selon l'une des revendications précédentes, comprenant plusieurs enceintes montées en série et/ou en parallèle.

16. Système de stockage et de restitution de la chaleur (40) comportant au moins un conteneur (200, 300, 400) selon l'une des revendications 1 à 15.

17. Installation de stockage d'énergie par air comprimé de type AACAES (100), comportant :
- un système de compression (20) pour comprimer de l'air lors d'une phase de compression ;
- un système de stockage et de restitution de la chaleur (40) selon la revendication 16 pour stocker la chaleur de l'air comprimé lors de la phase de compression et pour restituer ladite chaleur à l'air comprimé lors d'une phase de détente ;
- un réservoir final (10) de stockage de l'air comprimé par le système de compression et refroidi par le système de stockage et de restitution de la chaleur ;
- un dispositif de détente de l'air comprimé issu du réservoir de stockage final (30) lors de la phase de détente.

18. Installation selon la revendication 17, dans laquelle le réservoir final (10) a un volume compris entre 1000 m³ et 7000 m³ et l'enceinte dudit au moins un conteneur (200, 300, 400) du système de stockage et de restitution de la chaleur (40) a un volume compris entre 200 m³ et 1000 m³, ledit système de stockage et de restitution de la chaleur (40) comprenant de préférence au moins trois conteneurs (200).

19. Procédé de montage d'un conteneur selon l'une des revendications 1 à 15, comportant :
- l'installation de la coque en acier (404) dépourvue d'un chapeau de couverture (414) sur le site de montage du conteneur, ladite coque en acier (404) étant disposée sur un support (408) ;
- le montage des modules (410), l'installation de la couche isolante (406) et le remplissage desdits modules (410) par le matériau de stockage de la chaleur (407), par insertion successive desdits modules dans la coque en acier (404) de manière centrée pour former la première enveloppe en béton (403) et la deuxième enveloppe en béton (415);
- la fermeture du conteneur (400) par assemblage de la coque en acier (404) avec un couvercle en acier (414) préalablement isolé thermiquement, de préférence par soudage.

20. Procédé de montage selon la revendication précédente, dans lequel on remplit le premier volume (417) et le deuxième volume (416) du module (410) par le matériau de stockage de la chaleur (407) de manière à créer deux lits fixes de particules une fois ledit module (410) inséré dans la coque en acier (404).

21. Procédé de montage selon la revendication 19, dans lequel on remplit le premier volume (417) et le deuxième volume (416) du module (410) par le matériau de stockage de la chaleur (407) de manière à créer deux lits fixes de particules avant l'insertion dudit module (410) dans la coque en acier (404).

## Patentansprüche

1. Behälter (200, 300, 400) eines Systems (40) zum Speichern und Abgeben von Wärme, umfassend eine Umhüllung, umfassend Einspritz- und Abzugsmittel (201/202, 301/302, 401/402) eines Gases, das zu kühlen oder zu erhitzen ist, wobei die Umhüllung von einer ersten Hülle (203, 303, 403, 1003) aus Beton begrenzt wird, die von einer Wärmeisolierschicht (206, 306, 406, 1006) umgeben ist, wobei die Isolierschicht (206, 306, 406, 1006) von einer Stahlschale (204, 304, 404, 1004) umgeben ist, und **dadurch gekennzeichnet, dass** die Umhüllung mindestens zwei Module (210, 310, 410, 510, 1010) umfasst, wobei jedes Modul (210, 310, 410, 510, 1010) mindestens umfasst:
- ein erstes Volumen (217, 317, 417, 517, 1017), das von einer ersten Seitenwand (218, 318, 418, 518) aus Beton und einem perforierten Boden (205, 305, 405, 505, 1005) begrenzt wird;
- ein zweites Volumen (216, 316, 416, 516, 1016), welches das erste Volumen (217, 317, 417, 517, 1017) umgibt und von der ersten Seitenwand (218, 318, 418, 518), von einer zweiten Seitenwand (211, 311, 411, 511, 1011) aus Beton und von dem perforierten Boden (205, 305, 405, 505, 1005) begrenzt wird;
wobei das erste und zweite Volumen geeignet sind, jeweils ein Festbett aus Teilchen eines Materials (207, 307, 407, 507, 1007) zum Speichern und Abgeben von Wärme zu enthalten, und
die Module (210, 310, 410, 510, 1010) übereinander auf zentrierte Weise derart angeordnet sind, dass die zweiten Seitenwände (211, 311, 411, 511, 1011) die erste Hülle (203, 303, 403, 1003) aus Beton bilden, und die ersten Seitenwände (218, 318, 418, 518) eine zweite Hülle (215, 315, 415, 1015) aus Beton bilden, wobei die erste und zweite Hülle aus Beton und die Isolierschicht (206) nicht druckdicht sind.

2. Behälter nach Anspruch 1, wobei der perforierte Boden (205, 305) aus Metall ist.

3. Behälter nach Anspruch 2, wobei der perforierte Boden (205) jedes Moduls (210) ein einziges Metallgitter umfasst, das von der zweiten Seitenwand (211) aus Beton begrenzt wird und die erste Seitenwand (218) aus Beton stützt.

4. Behälter nach Anspruch 2, wobei der perforierte Boden (305) jedes Moduls (310) ein erstes Metallgitter (319), das von der ersten Seitenwand (318) aus Beton begrenzt wird, und ein zweites Metallgitter (320), das von der ersten und zweiten Seitenwand (318, 311) aus Beton begrenzt wird, umfasst.

5. Behälter nach Anspruch 1, wobei perforierte Boden (405, 510) jedes Moduls (410, 510) aus Beton ist.

6. Behälter nach Anspruch 5, wobei die Module (510) Monoblock-Betonmodule sind.

7. Behälter nach einem der vorhergehenden Ansprüche, wobei das Material (207) zum Speichern und Abgeben von Wärme in der Form von Betonteilchen ist.

8. Behälter nach einem der vorhergehenden Ansprüche in der Form einer Säule, wobei die ersten (218, 318, 418, 518) und zweiten (211, 311, 411, 511, 1011) Seitenwände aus Beton der Module (210, 310, 410, 510, 1010) zylindrisch sind.

9. Behälter nach einem der vorhergehenden Ansprüche, umfassend Druckausgleichlöcher (209, 309, 409, 509, 1029) in der ersten und zweiten Hülle (203, 303, 403, 1003/215, 315, 415, 1015) aus Beton.

10. Behälter nach einem der vorhergehenden Ansprüche, wobei jedes Modul (1010) außerdem eine Gashomogenisierungszone (1020) umfasst, die unter dem perforierten Boden (1005) platziert ist und keinerlei Wärmespeichermaterial (1007) aufweist.

11. Behälter nach einem der vorhergehenden Ansprüche, wobei die Wärmeleitfähigkeit liegt zwischen:
- 0,1 und 2 W.m⁻¹.K⁻¹ für die Hüllen (203, 215, 303, 315, 403, 415, 1003, 1015) aus Beton,
- 0,01 und 0,17 W.m⁻¹.K⁻¹ für die Isolierschicht (206, 306, 406, 1006), und
- 20 und 250 W.m⁻¹.K⁻¹ für die Stahlschale (204, 304, 404, 1004).

12. Behälter nach einem der vorhergehenden Ansprüche, wobei die Dicke der Isolierschicht (206, 306, 406, 1006) derart ist, dass, im Gebrauch, die Temperatur der Stahlschale (204, 304, 404, 1004) kleiner oder gleich 50°C ist, und wobei die Isolierschicht vorzugsweise ausgewählt ist aus Steinwolle, Perlit, Glaswolle, Schaumglas, einem Luftspalt, und vorzugsweise eine Schicht aus Steinwolle ist.

13. Behälter nach einem der vorhergehenden Ansprüche, umfassend zwischen 2 und 12 Module (210, 310, 410, 510, 1010) aus Beton.

14. Behälter nach einem der vorhergehenden Ansprüche, wobei die Umhüllung ein Volumen zwischen 200 m³ und 1000 m³ aufweist.

15. Behälter nach einem der vorhergehenden Ansprüche, umfassend mehrere Umhüllungen, die in Serie und/oder parallel montiert sind.

16. System (40) zum Speichern und Abgeben von Wärme, umfassend mindestens einen Behälter (200, 300, 400) nach einem der Ansprüche 1 bis 15.

17. Anlage (100) zum Speichern von Energie durch komprimierte Luft des Typs AACAES, umfassend:
- ein Kompressionssystem (20) zum Komprimieren von Luft während einer Kompressionsphase;
- ein System (40) zum Speichern und Abgeben von Wärme nach Anspruch 16, um die Wärme der komprimierten Luft während der Kompressionsphase zu speichern, und um die Wärme an die komprimierte Luft während einer Entspannungsphase abzugeben;
- einen Endbehälter (10) zum Speichern der Luft, die von dem Kompressionssystem komprimiert wird und von dem System zum Speichern und Abgeben von Wärme abgekühlt wird;
- eine Entspannungsvorrichtung der komprimierten Luft, die aus dem Endspeicherbehälter (30) während der Entspannungsphase kommt.

18. Anlage nach Anspruch 17, wobei der Endbehälter (10) ein Volumen zwischen 1000 m³ und 7000 m³ aufweist, und die Umhüllung des mindestens einen Behälters (200, 300, 400) des Systems (40) zum Speichern und Abgeben von Wärme ein Volumen zwischen 200 m³ und 1000 m³ aufweist, wobei das System (40) zum Speichern und Abgeben von Wärme vorzugsweise mindestens drei Behälter (200) umfasst.

19. Verfahren zur Montage eines Behälters nach einem der Ansprüche 1 bis 15, umfassend:
- die Installation der Stahlschale (404) ohne eine Abdeckhaube (414) an dem Montageort des Behälters, wobei die Stahlschale (404) auf einem Träger (408) angeordnet ist;
- die Montage der Module (410), die Installation der Isolierschicht (406) und das Füllen der Module (410) mit dem Wärmespeichermaterial (407) durch aufeinanderfolgendes Einsetzen der Module in die Stahlschale (404) auf zentrierte Weise, um die erste Hülle (403) aus Beton und die zweite Hülle (415) aus Beton zu bilden;
- das Verschließen des Behälters (400) durch Zusammenfügen der Stahlschale (404) mit einem Stahldeckel (414), der zuvor wärmeisoliert wurde, vorzugsweise durch Schweißen.

20. Montageverfahren nach dem vorhergehenden Anspruch, wobei das erste Volumen (417) und das zweite Volumen (416) des Moduls (410) mit dem Wärmespeichermaterial (407) gefüllt werden, um zwei Festbetten aus Teilchen zu erzeugen, sobald das Modul (410) in die Stahlschale (404) eingesetzt wird.

21. Montageverfahren nach Anspruch 19, wobei das erste Volumen (417) und das zweite Volumen (416) des Moduls (410) mit dem Wärmespeichermaterial (407) gefüllt werden, um zwei Festbetten aus Teilchen vor dem Einsetzen des Moduls (410) in die Stahlschale (404) zu erzeugen.

## Claims

1. A container (200, 300, 400) of a heat storage and return system (40), comprising an enclosure including means (201 /202, 301 /302, 401/402) for injecting and withdrawing a gas to be cooled or heated, said enclosure being delimited by a first concrete casing (203, 303, 403, 1003) surrounded by a thermally insulating layer (206, 306, 406, 1006), said insulating layer (206, 306, 406, 1006) being surrounded by a steel shell (204, 304, 404, 1004), and **characterized in that** said enclosure comprises at least two modules (210, 310, 410, 510, 1010), each module (210, 310, 410, 510, 1010) including at least:
- a first volume (217, 317, 417, 517, 1017) delimited by a first concrete lateral wall (218, 318, 418, 518) and a perforated bottom (205, 305, 405, 505, 1005),
- a second volume (216, 316, 416, 516, 1016) surrounding said first volume (217, 317, 417, 517, 1017) and delimited by first lateral wall (218, 318, 418, 518), by a second concrete lateral wall (211, 311, 411, 511, 1011) and by perforated bottom (205, 305, 405, 505, 1005),
said first and second volumes being suited to contain each a fixed bed of particles of a heat storage and return material (207, 307, 407, 507, 1007), and
said modules (210, 310, 410, 510, 1010) being arranged one above the other centered in such a way that second lateral walls (211, 311, 411, 511, 1011) form first concrete casing (203, 303, 403, 1003) and first lateral walls (218, 318, 418, 518) form a second concrete casing (215, 315, 415, 1015), the first and second concrete casings and insulating layer (206) being non-pressure tight.

2. A container as claimed in claim 1, wherein perforated bottom (205, 305) is made of metal.

3. A container as claimed in claim 2, wherein perforated bottom (205) of each module (210) comprises a single metal grate bounded by second concrete lateral wall (211) and supporting first concrete lateral wall (218).

4. A container as claimed in claim 2, wherein perforated bottom (305) of each module (310) comprises a first metal grate (319) bounded by first concrete lateral wall (318) and a second metal grate (320) bounded by first and second concrete lateral walls (318, 311).

5. A container as claimed in claim 1, wherein the perforated bottom of each module (410, 510) is made of concrete (405, 505).

6. A container as claimed in claim 5, wherein modules (510) are monobloc concrete modules.

7. A container as claimed in any one of the previous claims, wherein heat storage and return material (207) comes in form of concrete particles.

8. A column-shaped container as claimed in any one of the previous claims, wherein first (218, 318, 418, 518) and second (211, 31 1, 41 1, 51 1, 1011) concrete lateral walls of modules (210, 310, 410, 510, 1010) are cylindrical.

9. A container as claimed in any one of the previous claims, comprising equipressure holes (209, 309, 409, 509, 1029) in first and second concrete casings (203, 303, 403, 1003/215,315,415, 1015).

10. A container as claimed in any one of the previous claims, wherein each module (1010) further comprises a gas homogenization zone (1020) arranged under perforated bottom (1005) and empty of any heat storage material (1007).

11. A container as claimed in any one of the previous claims, wherein the thermal conductivity ranges between:
- 0.1 and 2 W.m⁻¹.K⁻¹ for concrete casings (203, 215, 303, 315, 403, 415, 1003, 1015),
- 0.01 and 0.17 W.m⁻¹.K⁻¹ for insulating layer (206, 306, 406, 1006), and
- 20 and 250 W.m⁻¹.K⁻¹ for steel shell (204, 304, 404, 1004).

12. A container as claimed in any one of the previous claims, wherein the thickness of insulating layer (206, 306, 406, 1006) is such that, in use, the temperature of steel shell (204, 304, 404, 1004) is less than or equal to 50°C, and wherein the insulating layer is preferably selected from among a layer of rock wool, perlite, glass wool, cellular glass, an air gap, and it is more preferably a rock wool layer.

13. A container as claimed in any one of the previous claims, comprising between 2 and 12 concrete modules (210, 310, 410, 510, 1010).

14. A container as claimed in any one of the previous claims, wherein the enclosure has a volume of between 200 m³ and 1000 m³.

15. A container as claimed in any one of the previous claims, comprising several enclosures arranged in series and/or in parallel.

16. A heat storage and return system (40) comprising at least one container (200, 300, 400) as claimed in any one of claims 1 to 15.

17. An AACAES type compressed air energy storage facility (100), comprising:
- a compression system (20) for compressing air during a compression phase,
- a heat storage and return system (40) as claimed in claim 16 for storing the heat of the air compressed during the compression phase and for returning said heat to the compressed air during an expansion phase,
- a final tank (10) for storing the air compressed by the compression system and cooled by the heat storage and return system,
- a device (30) for expanding the compressed air from the final storage tank during the expansion phase.

18. A facility as claimed in claim 17, wherein final tank (10) has a volume ranging between 1000 m³ and 7000 m³, and the enclosure of said at least one container (200, 300, 400) of heat storage and return system (40) has a volume ranging between 200 m³ and 1000 m³, said heat storage and return system (40) preferably comprising at least three containers (200).

19. A method for mounting a container as claimed in any one of claims 1 to 15, comprising:
- installing steel shell (404) without a cover cap (414) on the container mounting site, said steel shell (404) being arranged on a support (408),
- mounting modules (410), installing insulating layer (406) and filling said modules (410) with heat storage material (407), by successively inserting said modules into steel shell (404) centered so as to form first concrete casing (403) and second concrete casing (415),
- closing container (400) by assembling steel shell (404) with a steel cap (414) previously thermally insulated, preferably by welding.

20. A mounting method as clamed in claim 19, wherein first volume (417) and second volume (416) of module (410) are filled with heat storage material (407) so as to create two fixed particle beds once said module (410) inserted in steel shell (404).

21. A mounting method as claimed in claim 19, wherein first volume (417) and second volume (416) of module (410) are filled with heat storage material (407) so as to create two fixed particle beds prior to inserting said module (410) into steel shell (404).
